# FASCICULE DE BREVET EUROPEEN

(11) **EP 1 955 892 B1**
(45) Date de publication et mention de la délivrance du brevet: **14.12.2011**
(21) Numéro de dépôt: 08290109.1
(22) Date de dépôt: 06.02.2008
(51) Int. Cl.: B60N 2/48

(54) **Dispositif de blocage d'une tige crantée d'appui-tête comprenant un tiroir monté mobile axialement**
Blockiervorrichtung für eine Zahnstange einer Kopfstütze, die einen eingebauten, axial verschiebbaren Schieber umfasst
Device for locking a notched rod of a headrest comprising a slide valve mounted axially mobile

(30) Priorité: 09.02.2007 FR 0700945
(43) Date de publication de la demande: 13.08.2008
(73) Titulaire: Centre d'étude et de recherche pour l'automobile (CERA), 51100 Reims (FR)
(72) Inventeur: DeHondt, Thierry, 51430 Tinqueux (FR); Dauchez, Fernand, 02400 Bezu Saint Germain (FR)
(74) Mandataire: Sayettat, Julien Christian

(56) Documents cités:
- EP-A- 0 822 117
- DE-A1- 19 632 561
- FR-A- 2 786 141

## Description

L'invention concerne un dispositif de blocage en coulissement axial d'une tige crantée d'appui-tête de siège de véhicule automobile, un siège et un appui-tête de véhicule automobile comprenant un tel dispositif.

L'état de la technique le plus proche est divulgué dans le document DE 19632561.

Il est connu de réaliser un dispositif de blocage en coulissement axial d'une tige crantée de montage d'appui-tête de siège de véhicule automobile, ledit dispositif comprenant :
- une gaine, destinée à recevoir ladite tige en coulissement, ladite gaine comprenant un chapeau,
- un tiroir monté en coulissement radial dans ledit chapeau, ledit tiroir comprenant une saillie agencée pour pouvoir s'engager dans un cran de ladite tige de sorte à la bloquer réversiblement en coulissement,
- un premier moyen de contrainte élastique monté entre ledit chapeau et ledit tiroir de sorte à pouvoir disposer ladite saillie en appui contre ladite tige.

Le premier moyen de contrainte permet, lorsque la saillie se trouve en regard du cran, d'engager ladite saillie dans ledit cran de sorte à effectuer le blocage de la position de l'appui-tête en hauteur.

Pour effectuer le désengagement de la saillie du cran, l'utilisateur doit effectuer une manoeuvre manuelle à l'encontre du premier moyen de contrainte.

En cas d'accident, le choc de la tête du passager sur l'appui-tête exerce un appui vers le bas sur l'appui-tête, ce qui crée une contrainte axiale entre la saillie et le cran. Lorsque les surfaces respectives de coopération entre le cran et la saillie ne sont pas optimales, par exemple en raison d'une frappe insuffisamment nette du cran, le tiroir peut subir un coulissement radial à l'encontre du premier moyen de contrainte, conduisant à désengager la saillie du cran. Dans la mesure où la saillie est désengagée du cran, l'appui-tête n'est alors plus bloqué en coulissement axial et effectue un mouvement vers le bas, ce qui ne correspond plus à une configuration de sécurité pour l'utilisateur.

De façon similaire, en cas de collision, l'appui-tête peut, du fait de son propre poids et de son inertie, être soumis à un effort vers le haut, ce qui entraîne un risque de suppression de la coopération entre le cran et la saillie, et une éjection de l'appui-tête qui peut s'avérer dangereuse pour les occupants du véhicule.

L'invention a pour but de pallier ces inconvénients.

A cet effet, et selon un premier aspect, l'invention propose un dispositif de blocage en coulissement axial d'une tige crantée de montage d'appui-tête de siège de véhicule automobile, ledit dispositif comprenant :
- une gaine, destinée à recevoir ladite tige en coulissement, ladite gaine comprenant un chapeau,
- un tiroir monté en coulissement radial dans ledit chapeau, ledit tiroir comprenant une saillie agencée pour pouvoir s'engager dans un cran de ladite tige de sorte à la bloquer réversiblement en coulissement,
- un premier moyen de contrainte élastique monté entre ledit chapeau et ledit tiroir de sorte à pouvoir disposer ladite saillie en appui contre ladite tige,
ledit tiroir étant en outre monté mobile en débattement axial dans ledit chapeau de sorte à pouvoir être déplacé entre une position inactive, permettant de désengager ladite saillie dudit cran, et une position d'activation d'un moyen de blocage du coulissement dudit tiroir, empêchant de désengager ladite saillie dudit cran.

Dans cette description, les termes de positionnement dans l'espace (haut, bas, inférieur, supérieur, vertical, dessus, dessous,...) sont pris en référence au dispositif disposé dans le véhicule.

Un tel agencement permet que, en cas d'accident, la saillie ne puisse se désengager du cran et que l'appui-tête reste en configuration de sécurité.

Selon un deuxième aspect, l'invention propose un siège de véhicule automobile comprenant un tel dispositif.

Selon un troisième aspect, l'invention propose un appui-tête de véhicule automobile comprenant un tel dispositif.

D'autres particularités et avantages de l'invention apparaîtront dans la description qui suit, faite en référence aux figures jointes dans lesquelles :

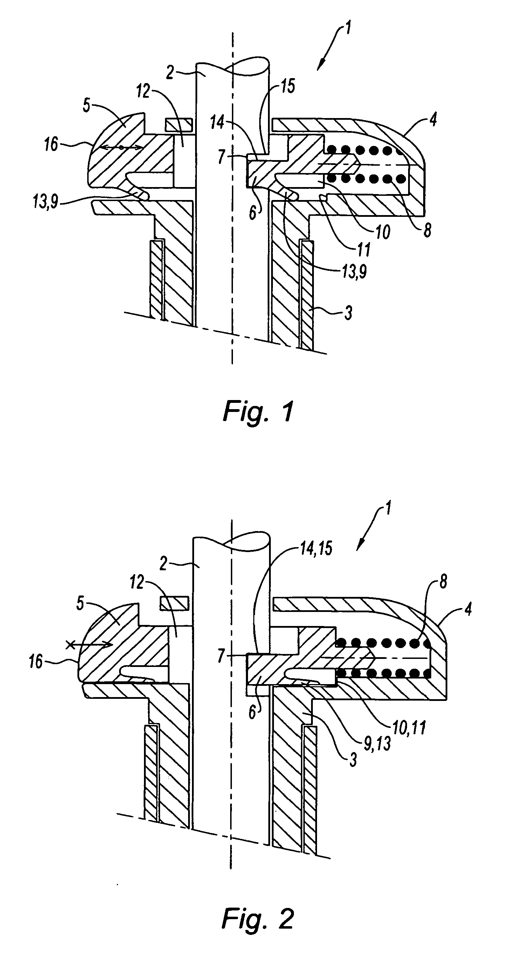

- la figure 1 est une représentation schématique partielle en coupe verticale d'un dispositif selon un mode de réalisation de l'invention, la saillie étant engagée dans le cran et le tiroir étant en position inactive,
- la figure 2 est une représentation analogue à celle de la figure 1, le tiroir étant en position d'activation.

En référence aux figures, on décrit un dispositif de blocage en coulissement axial d'une tige crantée de montage d'appui-tête de siège de véhicule automobile, le dispositif étant incorporé ici en haut du dossier dudit siège, ladite tige étant ici issue dudit appui-tête, ledit dispositif comprenant :
- une gaine 3, destinée à recevoir ladite tige en coulissement, ladite gaine comprenant un chapeau 4,
- un tiroir 5 monté en coulissement radial dans ledit chapeau, ledit tiroir comprenant une saillie 6 agencée pour pouvoir s'engager dans un cran 7 de ladite tige de sorte à la bloquer réversiblement en coulissement,
- un premier moyen de contrainte élastique 8 monté entre ledit chapeau et ledit tiroir de sorte à pouvoir disposer ladite saillie en appui contre ladite tige,
ledit tiroir étant en outre monté mobile en débattement axial dans ledit chapeau de sorte à pouvoir être déplacé entre une position inactive, permettant de désengager ladite saillie dudit cran, et une position d'activation d'un moyen de blocage du coulissement dudit tiroir, empêchant de désengager ladite saillie dudit cran.

Selon la réalisation représentée, la position inactive est située au dessus - respectivement et/ou en dessous, en variante non représentée - de la position d'activation, un deuxième moyen de contrainte 9 élastique étant disposé entre ledit chapeau et ledit tiroir de sorte à disposer en l'absence de contrainte ledit tiroir en position inactive.

Selon les figures, le tiroir 5 comprend une butée 10, ici sous forme de marche, et ledit chapeau comprenant une contrebutée 11, ici sous forme de contremarche, ladite butée pouvant coopérer avec ladite contrebutée de sorte à former moyen de blocage dudit tiroir en coulissement radial, en empêchant le désengagement de ladite saillie dudit cran, lorsque ledit tiroir est amené en position d'activation sous l'effet d'un appui vers le bas - respectivement et/ou vers le haut, en variante non représentée - communiqué à ladite tige alors que ladite saillie est engagée dans ledit cran.

Selon la réalisation représentée, le tiroir 5 est sous forme d'une plaque pourvue d'un orifice 12 de réception de la tige, la saillie 6 étant formée par une portion du bord dudit orifice.

Selon une représentation, le tiroir 5 est à base de matière plastique moulée, le deuxième moyen de contrainte 9 étant formé d'au moins une patte 13 inclinée issue de matière de la face inférieure - respectivement et/ou supérieure, en variante non représentée - dudit tiroir, ladite patte étant agencée pour pouvoir s'escamoter de façon élastique sous contrainte exercée vers le bas - respectivement et/ou vers le haut, en variante non représentée - sur ledit tiroir.

Selon la réalisation représentée, le dispositif 1 comprend deux pattes 13 disposées respectivement de part et d'autre de l'orifice 12 selon la direction de coulissement radial.

De façon non représentée, la saillie 6 eut être pourvue d'un renfort métallique.

Selon la réalisation représentée, une partie du tiroir 5 forme bouton 16 de désengagement manuel de la saillie 6 du cran 7.

Selon la réalisation représentée, le siège du véhicule automobile comprend le dispositif 1, ledit dispositif étant incorporé en haut du dossier dudit siège.

En variante non représentée, l'appui-tête du véhicule automobile comprend le dispositif 1, la tige 2 étant issue de l'appui-tête.

## Revendications

1. Dispositif (1) de blocage en coulissement axial d'une tige (2) crantée de montage d'appui-tête de siège de véhicule automobile, ledit dispositif comprenant :
• une gaine (3), destinée à recevoir ladite tige en coulissement, ladite gaine comprenant un chapeau (4),
• un tiroir (5) monté en coulissement radial dans ledit chapeau, ledit tiroir comprenant une saillie (6) agencée pour pouvoir s'engager dans un cran (7) de ladite tige de sorte à la bloquer réversiblement en coulissement,
• un premier moyen de contrainte élastique (8) monté entre ledit chapeau et ledit tiroir de sorte à pouvoir disposer ladite saillie en appui contre ladite tige,
ledit dispositif étant **caractérisé en ce que** ledit tiroir est en outre monté mobile en débattement axial dans ledit chapeau de sorte à pouvoir être déplacé entre une position inactive, permettant de désengager ladite saillie dudit cran, et une position d'activation d'un moyen de blocage du coulissement dudit tiroir, empêchant de désengager ladite saillie dudit cran.

2. Dispositif selon la revendication 1, la position inactive étant située au dessus - respectivement et/ou en dessous - de la position d'activation, un deuxième moyen de contrainte (9) élastique étant disposé entre ledit chapeau et ledit tiroir de sorte à disposer en l'absence de contrainte ledit tiroir en position inactive.

3. Dispositif selon la revendication 2, ledit tiroir comprenant une butée (10) et ledit chapeau comprenant une contrebutée (11), ladite butée pouvant coopérer avec ladite contrebutée de sorte à former moyen de blocage dudit tiroir en coulissement radial, en empêchant le désengagement de ladite saillie dudit cran, lorsque ledit tiroir est amené en position d'activation sous l'effet d'un appui vers le bas - respectivement et/ou vers le haut - communiqué à ladite tige alors que ladite saillie est engagée dans ledit cran.

4. Dispositif selon l'une quelconque des revendications 2 ou 3, le tiroir (5) étant à base de matière plastique moulée, le deuxième moyen de contrainte (9) étant formé d'au moins une patte (13) inclinée issue de matière de la face inférieure - respectivement et/ou supérieure - dudit tiroir, ladite patte étant agencée pour pouvoir s'escamoter de façon élastique sous contrainte exercée vers le bas - respectivement et/ou vers le haut - sur ledit tiroir.

5. Dispositif selon l'une quelconque des revendications 1 à 4, le tiroir (5) étant sous forme d'une plaque pourvue d'un orifice (12) de réception de la tige, la saillie (6) étant formée par une portion du bord dudit orifice.

6. Dispositif selon la revendication 5, comprenant deux pattes (13) disposées respectivement de part et d'autre de l'orifice (12) selon la direction de coulissement radial.

7. Dispositif selon l'une quelconque des revendications 1 à 6, la saillie (6) étant pourvue d'un renfort métallique.

8. Dispositif selon l'une quelconque des revendications 1 à 7, une partie du tiroir (5) formant bouton (16) de désengagement manuel de la saillie (6) du cran (7).

9. Siège de véhicule automobile comprenant un dispositif selon l'une quelconque des revendications 1 à 8, ledit dispositif étant incorporé en haut du dossier dudit siège.

10. Appui-tête de véhicule automobile comprenant un dispositif selon l'une quelconque des revendications 1 à 8.

## Claims

1. Device (1) for locking the axial sliding of a notched shaft (2) for mounting a motor vehicle seat headrest, said device comprising:
- a sheath (3), for receiving said sliding shaft, said sheath comprising a cap (4),
- a rack (5) mounted radially sliding in said cap, said rack comprising a projection (6) arranged to be able to be inserted into a notch (7) of said shaft so as to lock the sliding thereof reversibly,
- a first elastic tension means (8) mounted between said cap and said rack so as to be able to arrange said projection bearing against said shaft,
said device being **characterised in that** said rack is further movably mounted in axial clearance in said cap so as to be able to be moved between an idle position, for releasing said projection from said notch, and a position for activating means for locking the sliding of said rack, preventing said projection from being released from said notch.

2. Device according to claim 1, the idle position being situated above - and/or below respectively - the activation position, a second elastic tension means (9) being arranged between said cap and said rack so as to arrange said rack in the idle position in the absence of tension.

3. Device according to claim 2, said rack comprising an abutment (10) and said cap comprising a counterabutment (11), said abutment being suitable for engaging with said counterabutment so as to form means for locking the radial sliding of said rack, preventing the release of said projection from said notch, when said rack is moved to the activation position under the effect of a downward - and/or upward respectively - thrust transferred to said shaft when said projection is inserted into said notch.

4. Device according to any of claims 2 or 3, the rack (5) being based on moulded plastic, the second tension means (9) consisting of at least one inclined tab (13) from material from the bottom - and/or top respectively - face of said rack, said tab being arranged to be suitable for being retracted elastically under downward - and/or upward respectively - tension applied on said rack.

5. Device according to any of claims 1 to 4, the rack (5) being in the form of a plate provided with an orifice (12) for receiving the shaft, the projection (6) being formed by a portion of the edge of said orifice.

6. Device according to claim 5, comprising two tabs (13) arranged respectively on either side of the orifice (12) along the radial sliding direction.

7. Device according to any of claims 1 to 6, the projection (6) being provided with a metal reinforcement.

8. Device according to any of claims 1 to 7, a portion of the rack (5) acting as a button (16) for the manual release of the projection (6) from the notch (7).

9. Motor vehicle seat comprising a device according to any of claims 1 to 8, said device being incorporated at the top of the backrest of said seat.

10. Motor vehicle headrest comprising a device according to any of claims 1 to 8.

## Patentansprüche

1. Axial verschiebbare Blockiervorrichtung (1) einer Zahnstange (2) zur Befestigung einer Kopfstütze eines Autositzes, wobei die Vorrichtung Folgendes umfasst:
- eine Hülle (3), die dazu vorgesehen ist, die verschiebbare Stange aufzunehmen, wobei die Hülle eine Kappe (4) umfasst,
- einen Schieber (5), der radial verschiebbar auf der Kappe befestigt ist, wobei der Schieber einen Vorsprung (6) umfasst, der angeordnet ist, um in eine Kerbe (7) der Stange eingreifen zu können, um sie reversibel verschiebbar blockieren zu können,
- ein erstes elastisches Spannungsmittel (8), das zwischen der Kappe und dem Schieber befestigt ist, um den Vorsprung in Auflage gegen die Stange anordnen zu können, wobei die Vorrichtung **dadurch gekennzeichnet ist, dass** der Schieber außerdem beweglich in axialem Ausschlag in der Kappe befestigt ist, um zwischen einer inaktiven Position, die es ermöglicht, den Vorsprung von der Kerbe zu lösen, und einer aktivierten Position eines Mittels zur Blockierung der Verschiebung des Schiebers bewegt zu werden, die verhindert, dass der Vorsprung von der Kerbe gelöst wird.

2. Vorrichtung nach Anspruch 1, wobei die inaktive Position über - beziehungsweise und/oder unter - der aktivierten Position liegt, wobei ein zweites elastisches Spannungsmittel (9) zwischen der Kappe und dem Schieber angeordnet ist, um bei Abwesenheit von Spannung den Schieber in der inaktiven Position anzubringen.

3. Vorrichtung nach Anspruch 2, wobei der Schieber einen Anschlag (10) umfasst und die Kappe einen Gegenanschlag (11), wobei der Anschlag mit dem Gegenanschlag zusammenarbeiten kann, um ein Mittel zur Blockierung des Schiebers in radialer Verschiebung zu bilden, indem die Loslösung des Vorsprungs von der Kerbe verhindert wird, wenn der Schieber unter Einwirkung einer Auflage nach unten - bzw. und/oder nach oben - in die Aktivierungsposition gebracht wird, verbunden mit der Stange, während der Vorsprung in die Kerbe eingreift.

4. Vorrichtung nach einem der Ansprüche 2 oder 3, wobei der Schieber (5) aus einem geformten Plastikmaterial besteht, wobei das zweite Spannungsmittel (9) aus mindestens einer geneigten Lasche (13) gebildet ist, die aus dem Material der unteren Seite - bzw. und/oder der oberen Seite - des Schiebers herausragt, wobei die Lasche angeordnet ist, um sich auf elastische Weise unter Spannung, die nach unten - bzw. und oder nach oben - auf den Schieber ausgeübt wird, einziehen zu können.

5. Vorrichtung nach einem der Ansprüche 1 bis 4, wobei der Schieber (5) die Form einer Platte aufweist, die mit einer Öffnung (12) zur Aufnahme der Stange versehen ist, wobei der Vorsprung (6) durch einen Abschnitt des Randes der Öffnung gebildet ist.

6. Vorrichtung nach Anspruch 5, umfassend zwei Laschen (13), die jeweils auf beiden Seiten der Öffnung (12) gemäß der Richtung der radialen Verschiebung angebracht sind.

7. Vorrichtung nach einem der Ansprüche 1 bis 6, wobei der Vorsprung (6) mit einer metallischen Verstärkung versehen ist.

8. Vorrichtung nach einem der Ansprüche 1 bis 7, wobei ein Teil des Schiebers (5) einen Knopf (16) zum manuellen Loslösen des Vorsprungs (6) von der Kerbe (7) bildet.

9. Autositz, umfassend eine Vorrichtung nach einem der Ansprüche 1 bis 8, wobei die Vorrichtung auf der Oberseite der Rückenlehne des Sitzes eingebaut ist.

10. Kopfstütze eines Kraftfahrzeugs, umfassend eine Vorrichtung nach einem der Ansprüche 1 bis 8.
